(19) Europäisches Patentamt
European Patent Office
Office européen des brevets

(11) Publication number: 0 052 936
A1

# (12) EUROPEAN PATENT APPLICATION

(21) Application number: 81304846.9

(22) Date of filing: 16.10.81

(51) Int. Cl.³: C 08 J 9/34
C 08 J 9/28
//D01D5/247

(30) Priority: 07.11.80 US 205036

(43) Date of publication of application: 02.06.82 Bulletin 82/22

(84) Designated Contracting States: BE CH DE FR GB IT LI NL SE

(71) Applicant: Exxon Research and Engineering Company
P.O.Box 390 200 Park Avenue
Florham Park New Jersey 07932(US)

(72) Inventor: Moa-Tseng Chien, William
16014 Brookvilla Drive
Houston Texas(US)

(74) Representative: Northover, Robert Frank et al,
Esso Chemical Research Centre P.O. Box 1
Abingdon Oxfordshire, OX13 6BB(GB)

## (54) Microcellular structures and process for their preparation.

(57) A process for producing non-porous microcellular film comprising preparing a casting solution of a polymer; casting the polymer solution as a wet film onto a substrate; partially drying the cast film and concurrently contacting the film with an anti-solvent in vaporous form, thereafter drying the film. The product is a film having a thin non-porous skin and a section having thin-walled cells. The non-porous skin is on that portion of the polymer exposed to the vaporous antisolvent atmosphere.

EP 0 052 936 A1

# MICROCELLULAR STRUCTURES AND PROCESS FOR THEIR PREPARATION

The present invention relates to an improved process for the manufacture of microcellular polymeric structures, especially films and fibers and the novel structures produced thereby.

The general technique of solution casting involves forming a solution of the film forming polymer in a suitable solvent, casting the resulting solution on a suitable substrate, evaporating the solvent and winding the resultant film on rolls. The resultant films are colorless or transparent.

Opaque films have been prepared by the addition of pigments, which act as an opacifying agent. Opacifying agents often embrittle the film.

As alternate means of obtaining opacity, various processes have been described in the art, in which large numbers of voids in the film cause opacity.

In one method the film is deposited from an emulsion i.e., either an oil-in-water or a water-in-oil emulsion. The continuous phase is evaporated causing gelation of the polymer and entrapment of the dispersed phase, which is then evaporated thereby producing a porous film having microscopic voids throughout.

Still another technique for obtaining a porous, opaque, non-pigmented film is set forth in US Pat. No.3,031,328. Basically, this process contemplates preparing a solution of a thermoplastic polymer material in a mixture of a volatile organic solvent and a volatile non-solvent liquid which has an evaporation rate substantially less than that of the solvent. The clear homogeneous solution is then coated on a suitable substrate and dried by evaporation to produce an opaque blushed film. Other techniques for forming opaque, porous, non-pigmented microcellular thermosetting films are set forth in US Pat. No.3,655,591.

In commonly owned US patent 4,272,467, Belgian patent 814,492 and Japanese patent 1,033,166 a novel process for preparing microcellular, non-porous, non foam polymeric films and fibers is disclosed. Briefly, it was found that microcellular non-porous opaque films may be prepared by extruding a solvent solution of polymer

film or fiber, exposing the extrudate to an antisolvent, precipitating solid polymer in the presence of the antisolvent, drying and recovering the film or fiber. Prior to the contact with the antisolvent, there may be a partial removal of solvent from the extrudate, or a high concentration solution may be used with the result that partial removal of the solvent is not necessary. The resultant films and fibers are quite good; however, there are some disadvantages, notably non-uniformity in color in some types and the loss of flame retardants.

It is an advantage of the present process that uniform color is obtained in all types of films produced as well as having reduced or eliminated the loss of flame retardants. It is a further advantage that test results for both "film propagating tear" and "elongation to break" are improved. A further advantage is the controllability of the cell structure and film characteristics using the process. It is a particular feature of the present process that thinner walled and smaller cells may be produced.

These and other advantages and features of the present invention will become clear from the following description.

In one aspect, the present invention lies in the improved process for producing structures, e.g. film, cast from a solvent solution and precipitated with an antisolvent. The improved process has a central feature which is the concurrent partial evaporation of solvent from the film or fiber and contact of the film or fiber with the antisolvent to precipitate solid polymer. That is, both steps are included and carried out simultaneously together.

The improved process for producing microcellular, non-porous, cast structures comprises the steps of:

(a) preparing a casting solution of the polymer;

(b) casting a wet film onto a surface;

(c) concurrently in the same zone partially drying the cast film and contacting the wet film with a vaporous antisolvent;

(d) contacting the structure with liquid antisolvents; and

(e) removing solvent and antisolvent by further drying the non-porous, microcellular structure.

The concurrent partial drying and antisolvent contact of the wet film may be achieved in several ways.

The drying antisolvent contact may be achieved in a vaporous atmosphere. That is, the antisolvent may be contacted with the wet film, for example as a spray, aerosol, or evaporate (such as steam). One example of an antisolvent is water which may readily be employed in all three of these modes. The vaporous antisolvent may be heated, and would generally be heated, which would provide some heat for the partial drying of the wet film.

In the case of sprays and aerosols, however, the heat contained therein may not be appreciable and other heat sources such as radiant heaters (e.g., gas or electric lamp), hot air or combustion gases, which may be directed to the drying-antisolvent contact zone or directly onto the wet film are also used. Similarly, the vaporous antisolvent may be directed onto the film or generally into the drying-antisolvent contact zone.

In a practical and energy conserving sense, the direct impinging of the vaporous antisolvent and the heat onto the film is preferred.

The temperature in the partial drying and antisolvent contact zone is generally in the range of 25 to 200°C or more usually in the range of 30 to 100°C.

The product of the present process is also novel and different from that produced according to the prior art.

The film is extruded onto a suitable substrate or surface on one side. The exposed surface of the film is contacted with the vaporous antisolvent and the drying atmosphere. The exposed surface of the extrudate possesses new properties and it is believed, allows the cellular structure to be controlled.

Notably, the present film or other structure consists of a continuous solid polymer phase having a thin (about .25 to 2 mil, -0.63 to 5.08 micron) skin first section having substantially no cell structure, a second section adjacent and contiguous thereto having thin-walled, small cell structures (about 10 to 800 millimicron diameter). In some embodiments there are three distinct sections of the film. The first section is the skin as described, a second section adjacent and contiguous thereto having thin-walled, small cell structures (about 0.1 to 10 millimicron diameter) and a third section adjacent and contiguous to said second section comprising the predominant volume (generally about 50 to 80% of the cross section) of said film (or other structure) having larger cell structures (50 to 800 millimicron diameter), said film being non-porous. The thin non-porous skin is located on the surface of the film exposed to the vaporous antisolvent and the cell section is that portion of the film adjacent to the material on which the wet film is cast.

The thickness of the skin may be controlled by higher temperature, (e.g., injection of more steam) and longer residence time of the film in the vaporous partial drying and precipitating atmosphere. Similarly, the uniformity in cell structure is increased by higher temperatures and longer residence in the partial drying and precipitating zone. The desired skin thickness and degree of cell structure uniformity can be readily obtained by the operator employing these guidelines.

It is believed that the thin skin provides the means whereby the solvent removal is controlled, thereby resulting in the microcellular structure. Without the skin (as in the prior art films) the solvent boils off and the resultant product is porous, that is the prior art process produced a film without the non-porous skin with some cells opening at the surface and open cells throughout the film.

In the prior art method, there was a partial drying of the film, since it is essential that a portion of the solvent had to be removed before the precipitation

or else the solvent is very difficult to remove and entrained solvent destroyed the cell structure in the final drying. That is, a porous film of the present polymers was produced by the prior art, which did not have a skin.

The exposed surface, i.e., that subjected to the vaporous drying-precipitating atmosphere is a gloss yellow, i.e. a darker surface than the prior art porous films, because of the greater density of the surface of the present films.

This invention will be better understood from the following description taken with the accompanying drawing, wherein:

Fig. 1 is a cross sectional view of one embodiment of a typical PPA-M film produced according to the present invention.

Fig. 2 is a cross sectional view of another embodiment of a typical PPA-M film produced according to the present invention.

Suitable polymers which may be employed in the present process include aromatic polysulfones, polyimides, polyhydantoins, polyamides, poly(iminoimidazolidinediones) and poly(parabanic acids).

Both the poly(iminoimidazolidinediones) and poly (parabanic acids) and their methods of preparation are known and described in detail in commonly assigned US Pat. No. 3,661,859. The poly(parabanic acids) may also be prepared by other processes, such as shown in US Pat. No. 3,609,113.

The poly(iminoimidazolidinediones) contain a 1,3-imidazolidinedione -1,3-diyl ring of the following structure in the repeating units:

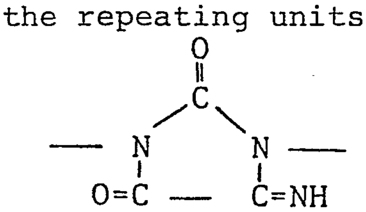

or

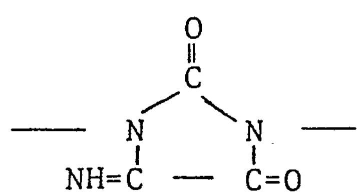

wherein NH is in the 4 or 5 position.

The poly(parabanic acids) also designated are poly(1,3-imidazolidine-2,4,5-triones) and designated as

PPA's herein, which may be prepared, for example, by the acid hydrolysis of poly(iminoimidazolidinediones) contain the imidazolidinetrione ring in the repeating units:

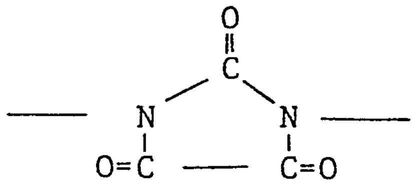

US Pat. No. 3,609,113 and German Patent No. 1,770,146 describe procedures for preparing polymers which contain the poly(parabanic acid) ring.

The polymers may contain both imino-1,3-imidazolidinedione-1,3-diyl rings and the imidazolidinetrione rings, thus the present polymers may be broadly characterized as having the repeating unit:

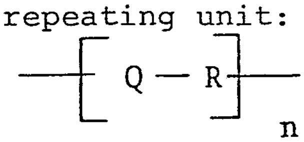

wherein Q is

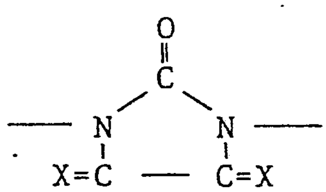

wherein X is O or NH, provided that at least one X is O, R is an organic moiety which may be aliphatic, alicyclic, aromatic or mixtures thereof, and n is sufficiently large to produce a solid product, e.g., 10 to 1,000.

Other preferred polymers are aromatic polyamides, aromatic polysulfones, and polyhydantoins which have been described in the art. See, for instance in the following patent documents: Netherlands 6809916, Belgium 723,772, German 1,807,742; 1,805,955; 1,812,002; 1,812,003; and 1,905,367. Polyimides are well known and are described in such publications as British 1,240,665, US 3,486,934, US 3,536,666, French 1,488,924, French 1,549,101, Russian 218,424, German 1,301,114, Netherlands 7,001,648 and the like.

The detailed preparation of these polymers and solutions of these polymers in suitable solvents are set

forth in the above-recited patents and others also in the art.

The preferred microcellular structures of the invention made from the above polymers are characterized by high temperature thermal stability, organic solvent resistance, relatively high tensile modulus, tensile strength and ultimate elongations with low shrinkage at high temperatures and are slow smoke formers when ignited.

Non-porous microcellular film from the preferred polymers have relatively high dielectric strengths. These properties have been found to offer outstanding advantages when the films are used in flexible circuitry, for example, in auto air bag circuits, light monitoring circuits, and telephone circuits, because of their ability to be soldered. They also are useable for fibers, where high tenacity and modulus are required.

In general, the polymers of the invention will be comprised of sufficient repeating units to be solids at room temperature. The repeating unit can contain heterocyclic rings.

The heterocyclic ring will be 5-membered and will contain carbon, and nitrogen linkages wherein at least two of the carbons will be in the form of carbonyl groups, i.e., 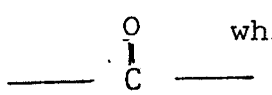 which are separated by a nitrogen atom.

Examples of heterocyclic rings which fall in this class are:

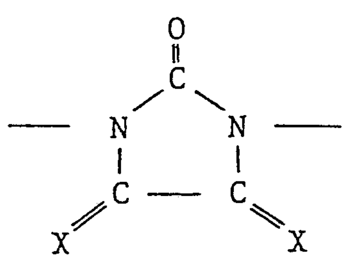

Poly(parabanic acids),
Poly(iminoimidazolidinediones);

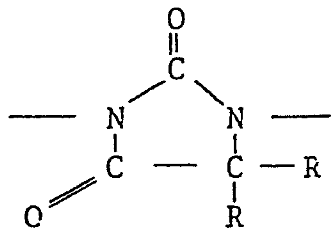

Poly(hydantoins);

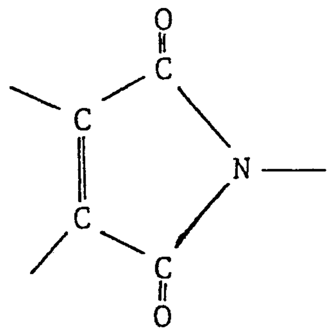

Poly(imides).

Other preferred polymers have repeating units as follows:

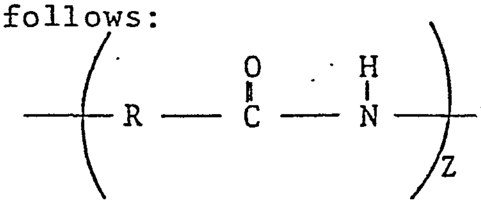

Poly(amides)

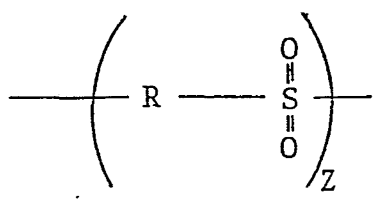

Polysulfones

R = Aromatic or substituted aromatic nucleous.

Wherein Z is a number from 20 to 1,000, preferably 50 to 200.

Although casting in general is a relatively well known process, for each polymer and solvent system there are unique problems brought about by the particular solvents which must be used and the properties of the polymer itself. Very generally, PPA's are soluble in moderate hydrogen bonding dipolar, aprotic solvents. This presents a practical problem in casting, since such solvents which are available at reasonable cost have relatively high boiling points and are of low volatility, except at relatively high temperatures. The effect of these parameters is that

when PPA is cast into even relatively thin structures, a film, for instance, it is relatively difficult to remove the last small amounts of solvent from the structure, e.g., film.

For instance, dimethylformamide (DMF) is considered to be one of the best solvents for working with PPA solution formulations. It boils at 156°C and its excellent solvating effect results in the fast dissolution of PPA along with the formation of low viscosity solutions.

Nevertheless, this combination of low volatility and high solvation, which characterizes a good solvent, makes the removal of the last amounts of solvent from even thin structures, such as films, very difficult. Therefore, film casting processes must be conducted with extremely high drying temperatures in order to get good solvent removal at reasonable production rates.

In accordance with this invention, low density non-porous, microcellular film structures, e.g., PPA, aromatic polyamides and others listed above are prepared by first solvent casting of film. The film is then concurrently partially dried and precipitated with an antisolvent, such as water. A basic requirement for the antisolvent is that it be miscible with the solvent in the polymer solution.

Additives, such as flame retardants, oxidation inhibitors, plasticizers, etc. should be dissolved in the solvent with the resin prior to casting.

The solvents which can be employed in accordance with this invention are moderate hydrogen bonding dipolar, aprotic solvents. These solvents have been described in US Patent No. 3,661,859. The preferred solvents are N,N-dimethylformamide, N-methylpyrrolidone, N,N-dimethylacetamide and dimethyl sulfoxide.

The anti-solvents as mentioned above must be miscible with the solvent. Typical of the anti-solvents are water, aliphatic alcohols such as methanol, ethanol, propanol, butanol and the like; aliphatic ethers such as methyl ether, ethyl ether, methyl ethyl ether, propyl ether, methyl

propyl ether, ethyl propyl ether and the like; and aliphatic ketones such as acetone, diethyl ketone, methyl ethyl ketone and the like wherein the aliphatic groups preferably have from one to six carbon atoms. The preferred anti-solvent is water.

The concentration of the resin in the solution should be such as to not produce a viscosity which would make the solution too difficult to handle. Typically, suitable viscosities can be determined by simple experimentation.

Generally, for ease of operation, the concentration of the resin in the casting solution may be such that the Brookfield viscosity at 25°C is between about 80 and about 800 poises. Desirably, the viscosity for the greatest ease of operation can be between about 200 and 300 poises. Stated otherwise, the desired casting solutions generally contain about 10 to 30 weight percent of polymer and preferably about 15 to 25 weight percent polymer.

Density of the resulting microcellular structure is largely dependent on the weight fraction of polymer in the wet film at the instant precipitation occurs. Casting solutions of PPA ranging above 30 weight percent resin are difficultly handled in conventional solvent casting equipment due to their very high viscosity. The high viscosity solution can nevertheless, be readily obtained through extrusion through an appropriately shaped die.

The method of the present invention allows for control and adjustment of the cell structure and size and hence to some degree, the density of the resultant polymer product.

To control the cell structure and the skin thickness, the following key process variables have to be controlled: the temperature and the quantity of the steam injection, the casting drum temperature, the residence time in the casting oven and the air impinging velocity. By properly adjusting the above variables, diffusion of water vapor into the wet film can be controlled. A glossy surface was observed when the simultaneous evaporation and precipitation

process of the invention was practiced. The color uniformity of the surface precipitated film was used to determine the steam injection.

A creamy color was observed if the steam injection was not adequate, whereas a dark yellow color was observed if the steam injection was excessive (very thick skin formed).

The range of densities can be further increased by (a) calendering the resulting cellular film (b) orienting the film to elongate and reduce the volume of the cellular portions, or (c) the use of different mechanical equipment designed to handle the extremely viscous polymer solutions, for example, slot extruders. That latter approach would increase the density of the microcellular material approximately proportionately to the amount of solvent reduction in the original polymer solvent solution. Thus, when solution extrusion equipment is used, much higher polymer solvent contents can be handled as compared to the casting methods described above.

In accordance with this invention, the non-porous microcellular structures can be prepared as free films, or as permanent coatings on surfaces.

The free film is prepared by laying down a layer of casting solution onto the desired flat surface which conveys the wet layer sequentially into a concurrent drying-antisolvent contact zone so as to partially dry the film, and hence to a final drying zone. Suitable surfaces which may be employed are metal, which has been polished or embossed, chrome plated metals, release paper and others known in the casting art. When needed, a release agent can be included in the casting solution to facilitate removing the finished film from the casting surface.

Suitable equipment for laying down the wet film of casting solutions are casting boxes, reverse roll coaters and pressured extrusion dies. The choice depends upon the thickness of wet film to be laid down and the viscosity of the casting solution. With casting solutions having a

Brookfield viscosity less than 200 poises one can employ a reverse roll coater. Intermediate viscosities and wet film thickness are handled best by casting boxes. The typical ranges are Brookfield viscosities of 100 to 300 poises at wet film thicknesses of 10 to 31 mils (25.4 to 78.7 microns). Very high viscosities, 300 to 1000 poises require extrusion die equipment. Other methods of laying down film would be known to practitioners in the art.

The vaporous atmosphere is readily obtained by providing injection means (steam for example) into the partial drying zone employed by the prior art.

The wet film exposed to the drying-water (anti-solvent) contact zone will have the initial composition of the casting solution. The water zone may consist of water vapor, water spray, steam, or any combination of these as long as water is rapidly absorbed by the film. In addition to water being absorbed into the film, solvent is extracted and/or evaporated from the film such that the solvent content of the microcellular film should be less than 10% after the partial drying. During the final drying step, the microcellular film will tend to melt with loss of microcellular structure if the solvent content is much greater than 10%.

As the film is partially dried and concurrently contacted with water or other antisolvent the film thickness and cell diameter will decrease due to removal of solvent.

The film is dried in a final drying zone which preferably is a staged zoned oven having a temperature gradient of from 175 to 270°C. The final solvent content is usually $<3000$ ppm. A further reduction in film thickness and cell diameter occurs during the final drying.

The properties of the finished microcellular film are basically determined by (1) film thickness, (2) film density, and (3) cell diameter. It is apparent that final film thickness is substantially less than that of the initially cast wet film since as indicated above the thickness is reduced in each step of the casting operation. The

largest reduction occurs in the drying anti-solvent (water) contact zone, since about 90%+ of the solvent is desirably removed. Thus, if a particular thickness of finished microcellular film is to be obtained, the initially cast wet film must be from 2 to 3 times this thickness. The upper practical limit of thickness of the finished microcellular film of this invention is about 20 mils (50.8 microns). This is to be contrasted with foams which are formed by an expansion process. Thus, the thickness of the foamed article and the cell diameter increase during the foaming process. This imposes a practical lower limit of greater than 20 mils (50.80 microns) thickness for foamed articles. The lower practical thickness for the present microcellular film is about 0.5 mil (1.27 micron) which is far below that attainable by foaming. Hence, as a practical matter the films of this invention range from 0.5 mil to 20 mils. (1.27 to 50.8 microns) in thickness.

Film density is governed by the volume fraction of the microcells. For example, if the volume fraction is 0.50, then the density of the microcellular film will be 50% of that of dense film from the same resin. The density of microcellular film has a practical lower limit of about 30% of the dense film value. The upper limit is about 90% of the dense film value. Foams by contrast are usually less than 30% of the corresponding dense article.

The range of cell diameters usefully employed in accordance with this invention can be from about 0.1 to about 10 microns. Although cell sizes can be greater or lesser, for most useful applications, the smallest cell diameter is preferred such as from about 0.1 to about 5 microns, although there are some exceptions to this rule. In any event, the mechanical strength, compressibility and toughness are increased the smaller the microcells are for any given film density. By contrast, foamed articles usually contain cells having greater than 10 microns diameter and their mechanical strength and toughness are low. The shape and distribution of the microcells are also important. In general, microcellular articles have structures made up

of either open or closed cells. All of the film of the invention containspredominantly isolated spherical closed cells which has such a uniform distribution that only occasionally do two cells impinge on one another. By virtue of the essentially discrete spherical closed cells, the transmission of gases, vapors and liquids is so slow through the film that it can be considered to be impermeable when compared to semi-permeable microporous membranes and foams. Moreover, the outer skin formed according to the present process makes the films substantially impermeable, notwithstanding the seepage through the cell structure.

A problem with the PPA films produced by the prior method, was the loss of flame retardant. It was found that the loss of flame retardant took place during the film precipitation and washing steps, which resulted in the produced films failing the vertical burn test, i.e., they were not self extinguishing. In addition, the migration of the flame retardant (or any additive) results in surface patterns and color non-uniformity. The formation of the impervious skin on the polymer structure according to the present process, would appear to restrict the additive migration or leaching out. The color and surface uniformity according to the present process is better than that previously obtained and the films are self-extinguishing.

In addition to these improvements, the low density film made according to present invention had around 40% increase in propagating tear strength and from 30 to 220% increase in its elongation to break (%).

Cellular film made from PPA solutions in DMF were prepared on equipment which is normally used to make porous cellulose acetate film for electrophoresis applications. The equipment consisted of a casting box applicator, a sixty-foot continuous stainless steel belt, and four chambers equipped to control humidity, temperature and the rate of air flow.

Provisions were also incorporated to inject steam or otherwise direct the vaporous water onto the moving

continuous belt for the purposes of initial precipitation and for washing the solvent from the film in the first heating zone.

The belt speed varied from .50 to 2.5 feet per minute (0.15 to 0.76 metres per minute). The temperature was about 100°F (38°C). The air rate was about 900 to 1,300 cu. ft. per minute (25.5 to 36.8 $m^3$ per minute). The thickness of the wet film varied from 8 to 20 mils (20.3 to 50.8 microns). The total time in the oven ranged from about 6 minuted to about 15 minutes. Generally, time periods above 10 minutes and less than 20 minutes appeared to be satisfactory.

The process as claimed results in somewhat slower line speed in order to remove the same amount of solvent as in the prior art method; however, by leaving somewhat more solvent, i.e., 30 to 70 volume % in the film, faster film speeds can be obtained. That is, at a given film speed the present improved process, will leave a larger amount of residence solvent in the film; however, the improved and different product as described is obtained. This additional residue of solvent in most applications is not noticeable or of any significance.

For purposes of illustration, but not for exclusion, the examples illustrating the invention will be described with respect to a particular polymer. That is, a polyparabanic acid prepared from diphenyl methane diisocyanate to result in a high performance polymer having the repeating unit shown below:

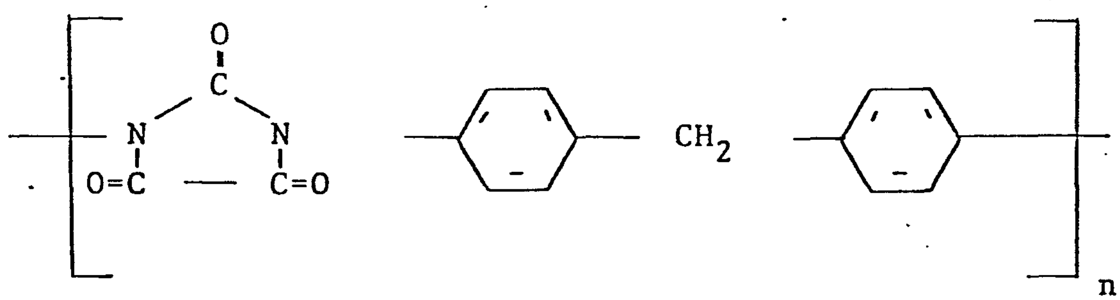

which is also designated as poly[1,4-phenylenemethylene-1,4-phenylene-1,3-(imidazolidine-2,4,5-trione)] which are also designated in chemical abstracts as poly[(2,4,5-trioxo-1,3 imidazolidinediyl)-1,4-phenylene methylene-1,4-phenylene].

For the purposes of convenience, this polymer species will be referred to as PPA-M.

The microcellular PPA-M films are competitive with a widely used non-cellular film from engineering thermoplastics in tensile strength, percent elongation, tearing strengths and dielectric strengths. On the other hand, the dielectric constant of the microcellular film of this invention is comparable to the very structurally weak foamed sheetings. The very low dielectric constant is of great utility when the PPA-M is used in electrical insulation for both power and signal transmission. Thus, the microcellular films of this invention provide a dielectric insulation which has a desirably low dielectric constant and at the same time high dielectric and mechanical strengths.

Although it is predictable that mechanical properties such as modulus and tensile strength will decrease with decreasing density, it was found that these mechanical properties were not sufficiently diminished to seriously affect the utility of the cellular article for many applications. Moreover, in the case of the film, the propagating tear strength was better than that of the dense film. The present process produces film very similar to the dense film.

The dielectric constant will decrease with decreasing density, and therefore, the dielectric constant for the cellular products is lower than that for the dense film products. This makes the cellular film more attractive for use as insulation, e.g., for microwave circuitry, especially where transmission is to be over relatively long distances and for signal transmission as in computers. In an analogous fashion, the lower thermal conductivity makes these structures desirable for thermal insulation.

As is the case of the dense film, the cellular film also withstands commercial solder bath temperatures, i.e., 500°F (260°C) vs. 300°F (149°C) for foamed sheetings.

One important and highly advantageous property of the cellular film, as opposed to the dense (non-cellular)

film is that copper circuits can be electroplated directly onto the cellular film, with much higher peel strengths for the electroplated copper on the cellular film than on the dense film.

For example, peel strengths for copper electrodeposited on the dense films are in the range of 2.5 to 3.0 pounds per inch (0.45 to 0.54 kg per cm). But peel strengths on copper electrodeposited onto the microcellular films are in the range of about 8 pounds per inch (1.43 kg per cm).

This is an extremely important aspect of the cellular film which gives it an outstanding advantage, taken in combination with its other properties, over dense film.

These films are much more flexible than dense film of the same thickness, which is an advantage for thick multilayer structures. Cellular film, because of its combination of properties and its relatively low cost is an ideal material for flexible circuits and flat conductor cables.

The preferred structures produced by the practice of this invention are characterized by the presence therein of a large number of discrete closed cells. Substantially all of these cells or voids are less than 25 microns, and preferably less than 2 microns, in size. Most preferably the cell size is less than 5 microns. The average cell size and cell size distribution is governed by the conditions under which the structures are made, e.g., temperature, solvent, anti-solvent, polymer solids content of casting solutions, etc. The range obtainable is from about 0.1 to 25 microns.

Unless some color-forming material has been included in the composition, such as a soluble dye, the preferred films of this invention are opaque and yellow. Colored films may be obtained by incorporating small amounts of dyes.

The compositions of this invention may be precipitated onto fabrics made from fiber glass, resinous yarns, vegetable or cellulosic yarns and cords. When these fabrics or cords are coated with the structures of this invention,

an opaque or yellow fabric is obtained without the addition of pigments as needed in the fabric heretofore employed. These coated fabrics have very desirable flexibility.

Although the above discussion has been made with reference to films as discrete articles, it is to be noted that films in terms of surface coatings with unique and important properties and which are bonded to a substrate can also be produced according to the technique of the invention.

The structures of this invention may be formed as surface coating films by the method of the present invention described above.

As already indicated compositions of this invention may be applied as films to various types of surfaces or substrates. These surfaces may be of the type whereby the film is to be removed by a suitable method or of the type where it is adhered to the final substrate such as the metal of an automobile. Among the more suitable surfaces which may be coated with the cellular structures of this invention are steel, treated steel, galvanized steel, concrete, glass, fabrics, fiber glass, wood, plaster board, aluminum, treated aluminum, lead, copper and plastics. The most preferred surfaces are metals such as treated steel and treated aluminum.

A particularly important aspect of the present invention is the coating of electrical or signal transmitting wires such as copper wires. This may be carried out in conventional wire coating equipment, suitably modified for the injection of the vaporous antisolvent atmosphere into the first portion or stage of the drying operation in accordance with the present invention.

Although considerable emphasis has been placed on cellular film formation and applications, it is an important feature of this invention that cellular fibers of high strength can be produced utilizing the technique of the invention.

Fibers made by the conventional wet spinning techniques of the art are never left in cellular form, but are remelted and oriented in order to eliminate the cellular

structure which gives rise to fibers having low modulus. In this invention, the polymers used have such a high modulus that the microcellular fibers can be used with only moderate orientation. Ordinarily orientation is used to improve fiber strength.

The microcellular films, fibers and other structures can also be electrocoated with various metals such as copper, aluminum and the like in order to form thin conductive coatings with a minimum of coating metal.

Electrocoated structures can be used in a wide variety of decorative and utilitarian applications. These involve automotive trim, under-the-hood uses, and radiation shields.

Electrodeposition and chemical metalizing can also be used to coat catalytic metals such as palladium, platinum, nickel, and the like, within the interstices of the structure so that it can be used to form an extremely high surface area, artificial surface for conducting catalytic reactions at relatively high temperatures.

The cellular structures of the invention are also highly useful for specialty applications where highly tenacious painted surfaces are required.

The figures of the drawing show typical films produced according to the present process. Fig. 1 shows a film produced with a relatively thicker skin A' compared to that in Fig. 2 and with a single section B' of uniform cells 110 and a single demarkation line 111 between the skin A' and the cell section B'. The surface 112 was not exposed to the vaporous drying precipitating atmosphere and has no skin. The magnification is about 500 times.

In Fig. 2 there are three fairly distinct sections discernible in the film which is about a 500 times magnification.

Section A is the thin skin which is cell free and forms an impervious barrier. The demarkation line 13 between Section A and Section B, the thin-walled, small cell structure 10 is fairly well discernible; however, there is some

gradation between each of the sections. The demarcation line 12 between sections B and C is quite clear. The larger cell structure of Section C is represented by cell 11 and begins at line 12 and goes through the major portion of the film volume to the bottom surface 14 of the film. Surface 14 rests on the material or substrate (not shown) on which the wet film is cast in the present process.

The surface 14 and the area of the Section C immediately adjacent thereto is also representative of both surfaces of prior art film made by a process employing separate steps of partial drying and antisolvent contact. Since the prior art film does not have thick skin formed on the exposed side it does not provide the barrier to fluids which the present film provides.

The following examples are presented to illustrate the invention.

Examples 1 and 2

Two PPA-M films are compared. Example 1 is a microcellular film according to the present invention.

Example 2 is a microcellular film prepared in the same manner as the film (Ex. 1) of the present invention, but without steam injection into the casting oven. The films were prepared from the same lot of PPA-M and sequentially, that is, the film of Example 2 is the same film as Example 1 but with the steam injection cut off.

The film solution was cast onto a moving substrate (paper), moving at a line speed of 25 inches per minute (63.5 cm per minute). The drum speed was 23 inches per minute (58.4 cm per minute). In the run of Example 2, steam was injected into the casting oven through nozzles directed onto the line, which also directed hot combustion gases onto the line. The oven temperature was $125^{\circ}F$ ($52^{\circ}C$) top and bottom. In the run of Example 1, steam was injected into the bottom zone at a 1/4 pound (0.11 kg) pressure. The wet flotation gauge was set at 19 mils (48.25 microns) for the initial film thickness onto the moving paper substrate. The paper was Warren Transkote VEL US release paper The width of the film was 33½ inches (85.1 cms).

From the casting oven, the film passed into a water precipitation bath. The films were passed through the dryer under the following conditions:

| Pass | Zone 1 | Zone 2 | Zone 3 | Line Speed | |
|---|---|---|---|---|---|
| | $^{o}F$ ($^{o}C$) | $^{o}F$ ($^{o}C$) | $^{o}F$ ($^{o}C$) | in/min | (cm/min) |
| 1st | 200 (93) | 250 (121) | 300 (149) | 4 | (10.2) |
| 2nd | 400 (204) | 450 (232) | 520 (271) | 1.5 | (3.8) |

Composition information and test results are reported in the Table. The superiority of the % elongation and tensile strength of the present microcellular film to the non-invention film can be readily seen from the TABLE.

TABLE

| Example | | 1 | 2 |
|---|---|---|---|
| Polymer Solution | | | |
| Inherent viscosity of polymer ($\eta$inh) | | 0.97 | 0.97 |
| Solvent | | DMF[1] | DMF |
| Composition | | | |
| Polymer (PPA-M)(Kg) | | 7.9 (21.8%) | 7.9 (21.8%) |
| OBBP[2] (Kg) | | 0.23 | 28.2 |
| DMF (Kg) | | 28.2 | 28.2 |
| Final Solution Viscosity (cps) | | 25000 | 25000 |
| Steam Injection | | yes | no |
| Film Gauge mils (microns) | | | |
| Deposited | | 19 (48.3) | 19 (48.3) |
| After casting box | | 18.4 (46.7) | 18.4 (46.7) |
| After precipitation box | | 7.1 (18.0) | 7.1 (18.0) |
| After drying | | 7.0 (17.8) | 6.1 (15.5) |
| Density (gm/cc) | | 0.62 | 0.70 |
| Tear Strength gm/mil (gm/micron) | M.D.[3] | 9.6 (3.8) | 9.6 (3.8) |
| | T.D.[4] | 10.3 (4.1) | 10.3 (4.1) |
| Overall Tear Strength (gm) | M.D. | 67 | 59 |
| | | 72 | 63 |
| % Elongation | M.D. | 172 | 72 |
| | T.D. | 142 | 56 |
| Tensile Strength Psi (kg/cm$^2$) | M.D. | 7011 (493) | 6180 (435) |
| | | 6060 (426) | 5377 (378) |
| Overall Tensile Strength lb/in (kg/cm) of width | M.D. | 49 (8.8) | --- |
| | T.D. | 42.4 (7.6) | --- |

(1) Dimethyl formamide

(2) Octobromobiphenyl

(3) Machine Direction

(4) Traverse Direction

0052936

CLAIMS

1. A microcellular structure characterized by a continuous solid polymer phase having a thin skin, comprising a first section having substantially no cell structure and a second section adjacent and contiguous thereto having thin-walled cells.

2. A microcellular structure according to claim 1 in the form of a film.

3. A microcellular film according to claim 2 having a thickness of from 0.5 to 20 mils (1.27 to 50.8 micron).

4. A microcellular structure according to any of claims 1-3 in which the second section comprises a first portion, adjacent and contiguous to said first section, and having a thin-walled, small cell structure and a second portion, adjacent and contiguous to the first portion, comprising the predominant volume of the total structure and having thin-walled, generally larger cell structure than said first portion.

5. A process for producing non-porous, microcellular structures according to any of claims 1-4 comprising the steps of:

(a) preparing a casting solution of a polymer;
(b) casting a wet film onto a surface;
(c) partially drying the cast film;
(d) contacting the wet film with an antisolvent; and
(e) removing solvent and antisolvent by further drying the non-porous, micro-cellular structure, in which steps (c) and (d) are carried out concurrently in the same zone as a single step, the antisolvent being vaporous.

6. A process according to claim 5 in which the vaporous atmosphers is a spray, aerosol or evaporate.

7. A process according to claim 5 or 6 in which the temperature of the partial drying and antisolvent contact zone is in the range of 25 to 200$^{o}$C.

8. A process according to claim 7 in which the temperature of the zone is in the range of 30 to 100$^{o}$C

9. A process according to any of claims 5-8 in which the polymer is an aromatic polysulfone, polyimide, polyhydantoin, polyamide, poly(iminoimidazolidinedione) or poly(parabanic acid).

10. A process according to any of claims 5-9 in which the polymer has the structure

$$-\left[ Q - R \right]_n-$$

wherein Q is

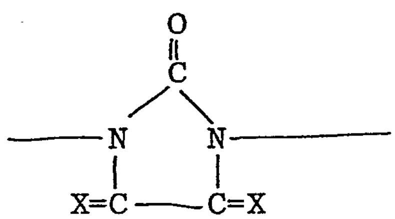

X is O or NH provided at least one X is O, R is an organic radical and n is sufficiently large to produce a solid product.

11. A process according to claim 10, in which one X is O and one X is NH.

12. A process according to claim 10, in which each X = O.

13. A process according to claim 10 in which the polymer is PPA-M.

14. A process according to any of claims 5-13, in which the solvent is N,N-dimethylformamide, N-methyl-pyrrolidone, N,N-dimethylactamide or dimethyl sulfoxide.

15. A process according to claim 14, in which the solvent is N,N-dimethylformamide.

16. A process according to any of claims 5-15, in which the antisolvent is water, aliphatic alcohol, aliphatic ether, or aliphatic ketone.

17. A process according to claim 16, in which that said antisolvent is water.

18. A process according to any of claims 5-17 in which the solution contains from 10 to 30 weight percent of polymer.

1/1

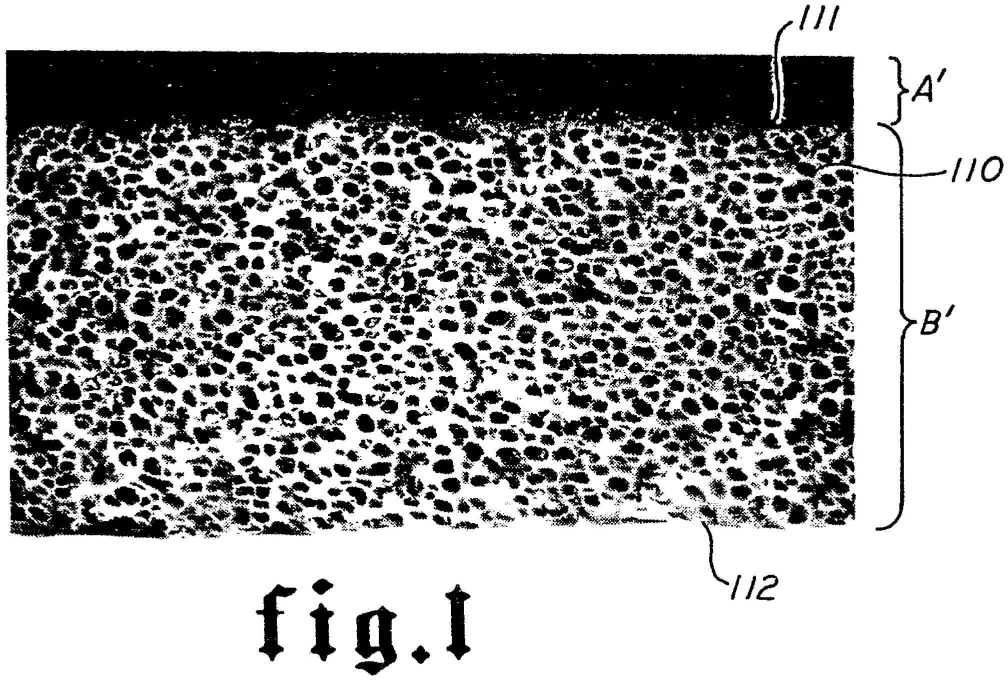


fig.1

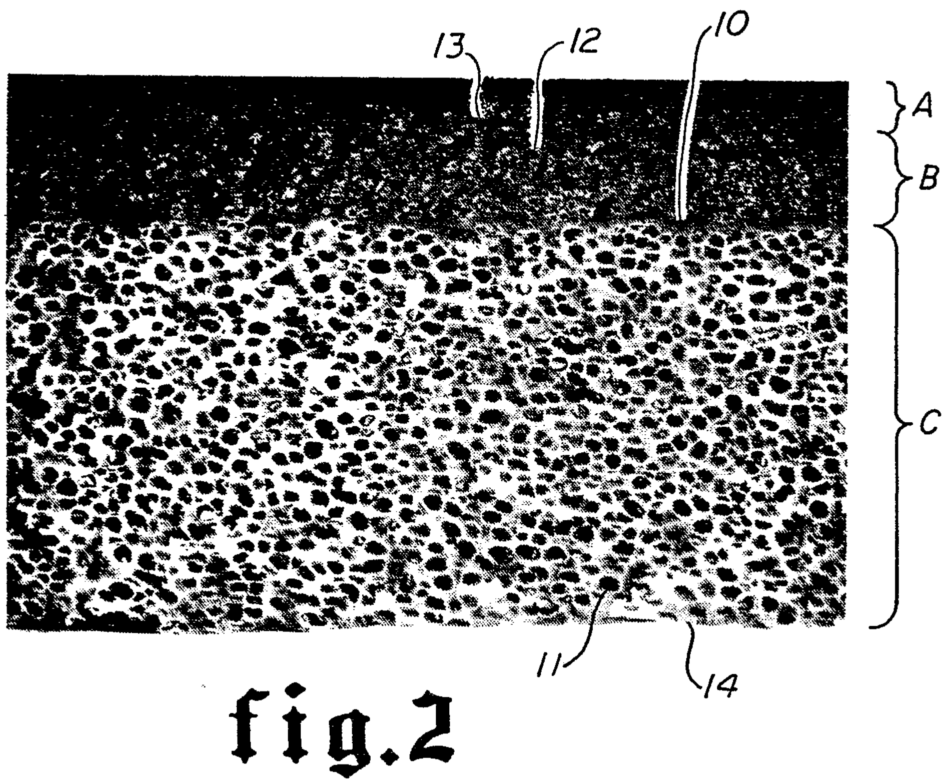


fig.2

0052936

European Patent Office

# EUROPEAN SEARCH REPORT

Application number
EP 81 30 4846

| Category | DOCUMENTS CONSIDERED TO BE RELEVANT<br>Citation of document with indication, where appropriate, of relevant passages | Relevant to claim | CLASSIFICATION OF THE APPLICATION (Int. Cl. 3) |
|---|---|---|---|
| | US - A - 4 105 616 (T.L. PATTON) | | |
| X | * examples 8,9,10; column 9, lines 39-41; column 6, lines 35-36 * | 1-3 | C 08 J 9/34<br>9/28<br>/D 01 D 5/247 |
| Y | * claims * | 5,9-13 | |
| | -- | | |
| Y | GB - A - 1 473 946 (EXXON) | | |
| | * claims 1-11, 19-22 * | 5,6,9,<br>10,12,<br>14-18 | |
| D | & BE - A - 814 492 | | |
| | -- | | TECHNICAL FIELDS SEARCHED (Int.Cl. 3) |
| Y | GB - A - 1 345 763 (BAYER) | | C 08 J 9/28<br>9/34<br>D 01 D 5/247 |
| | * claims 1,6-9,15; page 2, line 121 - page 3, line 37 * | 5-8,<br>14-18 | |
| | -- | | |
| Y | GB - A - 1 386 492 (BAYER) | | |
| | * claims 1-18; page 4, line 117 - page 5, line 6 * | 1,5,7,<br>8 | |
| | -- | | |
| Y | US - A - 4 201 820 (B.H. JOHNSON) 6-05-1980 | | CATEGORY OF CITED DOCUMENTS |
| | * examples * | 1-18 | X: particularly relevant if taken alone<br>Y: particularly relevant if combined with another document of the same category<br>A: technological background<br>O: non-written disclosure<br>P: intermediate document<br>T: theory or principle underlying the invention<br>E: earlier patent document, but published on, or after the filing date<br>D: document cited in the application<br>L: document cited for other reasons |
| | -- | | |
| A | FR - A - 2 091 291 (G.E.) | 4 | |
| P | US - A - 4 262 094 (B.H. JOHNSON) | 1-18 | |
| P,D | US - A - 4 272 467 (B.H. JOHNSON) | 1-18 | |
| | ---------- | | |
| X | The present search report has been drawn up for all claims | | &: member of the same patent family,<br>corresponding document |

| Place of search | Date of completion of the search | Examiner |
|---|---|---|
| The Hague | 02-03-1982 | HALLEMEESCH |